# EUROPÄISCHE PATENTANMELDUNG

(11) **EP 1 083 498 A1**
(43) Veröffentlichungstag der Anmeldung: **14.03.2001**
(21) Anmeldenummer: 99117662.9
(22) Anmeldetag: 07.09.1999
(51) Int. Cl.: G06F 17/30

(54) **Modifikation von Verweisen in Hypertextdokumenten**

(71) Anmelder: webwasher.com AG, 33100 Paderborn (DE)
(72) Erfinder: Cuny, Roland, 33104 Schloss-Neuhaus (DE); Müller, Sören, 33102 Paderborn (DE)
(74) Vertreter: Schaumburg, Thoenes & Thurn

(57) **Zusammenfassung**

Beschrieben wird ein Computersystem (22) mit Programmodulen (10, 16). Die Programmodule (10, 16) suchen Verweise in Hypertextdokumenten auf, verglichen diese mit Einträgen in einer Datenbasis (20) und modifizieren die Darstellungsattribute von den Verweisen, die mit den Einträgen in der Datenbasis (20) übereinstimmen.

## Beschreibung

### Technisches Gebiet

Die Erfindung betrifft das Darstellen von Hypertextdokumenten in Computersystemen.

### Stand der Technik

Für das Darstellen von Hypertextdokumenten in globalen Computernetzwerken, wie dem World Wide Web (WWW) des Internets, werden Browser genannte Anzeigeprogramme eingesetzt. Diese Browser haben eine große Anzahl von Funktionen integriert. Die Browser sind durch als Plug-in bezeichnete Programmodule in ihren Funktionen erweiterbar. Die Plug-in Programmodule sind jedoch aufwendig zu programmieren und spezifisch für einen speziellen Browser. Um Hypertextdokumente mit Hilfe von browserunabhängigen Funktionen zu verändern, werden sogenannte http-proxy Programmodule eingesetzt, die als Bindeglied zwischen dem globalen Netzwerk und dem Browser dienen. Das http-proxy Programmodul wird auf dem selben Computer, wie der Browser oder auf einem als Proxy-Server bezeichneten Computersystem abgearbeitet. Die Proxy-Server dienen zum Zwischenspeichern und zum Filtern von Daten. So werden diese Proxy-Server auch zur Zugriffskontrolle von Teilnehmern des globalen Netzwerks auf interne Daten eines Computersystems oder eines Computernetzwerks, z.B. eines Intranets, eingesetzt.

Hypertextdokumente sind überwiegend in einer Dokumentenbeschreibungssprache erstellt, die als HTML (Hypertext Markup Language) bezeichnet wird. Es ist möglich, Querverweise auf andere Texte und/oder Verkettungen mit weiteren Texten in diese Dokumente zu integrieren. Mit diesen Querverweisen ist es somit möglich, Verbindungen zu anderen Dokumenten im globalen Computernetz herzustellen.
Die Dokumentenbeschreibungssprache HTML ist für die Version 2.0 in dem Dokument RFC 1866 von T. Berners-Lee und D. Connolly dargestellt. Dieses Dokument ist Teil einer Reihe von Spezifikationen für das Internet, die als 'request for comment', abgekürzt RFC, bezeichnetet werden. Diese RFC-Dokumente werden üblicherweise elektronisch publiziert; weitere Information ist z.B. unter http://www.rfc-editor.org zu erhalten. Für die Übermittlung von Hypertextdokumenten wird das Protokoll HTTP (Hypertext Transfer Protokoll) verwendet, dessen Version 1.0 in dem RFC 1945 beschrieben ist. Neuere Varianten sind üblicherweise über die Adresse http://www.w3.org als Hypertextdokumente oder in anderen Formaten verfügbar und somit elektronisch veröffentlicht. Für die Anzeige von Hypertextdokumenten werden wie erwähnt als Browser bezeichnete Programmodule verwendet. Ein Programmodul dieser Art ist z.B. ARENA, dessen Quellcode über ftp://ftp.Yggdrasil.com/pub/dist/web/arena/ erhältlich ist.

Es ist wünschenswert, die Anzeige von Hypertextdokumenten zu beeinflussen. Beispielsweise ist es manchmal vom Betrachter erwünscht, Werbegrafik auszublenden. Hierzu ist eine Technik bekannt, die sich eines http-proxy Programmoduls bedient. Von dieser Art sind mehrere Programmodule bekannt, z.B. das Programmodul namens "WebWasher" der Firma Siemens AG oder das Programm "junkbuster" der Junkbuster Corporation (erhältlich unter http://www.junkbusters.com/ht/en/ijb20.tar.Z). Diese http-proxy Programmodule dienen vor allem dazu, in Hypertextdokumenten, die dem Computersystem aus dem globalen Netzwerk übertragen werden, unerwünschte Werbegrafiken, Werbeverweise und/oder andere unerwünschte Informationselemente zu löschen und dem Browser ein Hypertextdokument zu übergeben, das diese unerwünschten Informationselemente nicht mehr enthält. Die unerwünschten Informationselemente werden auf der Anzeigeeinheit des Computersystems nicht angezeigt.

Die bislang bekannten Programme dieser Art führen die Modifikationen für die Anzeige des Dokuments an Hand vordefinierter Regeln durch. Diese Modifikationen können durch Parameterauswahl vom Anwender ausgewählt werden; d.h. es ist eine Beeinflussung des vordefinierten Algorithmus möglich. Es ist jedoch auch wünschenswert, daß beispielsweise die Verweise im angezeigten Hypertextdokument, die auch in der im Browser vorhandenen Liste bevorzugter Dokumente enthalten sind, als Text mit speziellen Darstellungsattributen angezeigt oder solche Verweise hervorgehoben werden, die der Nutzer bevorzugt, z.B. wenn der Zugriff auf die Dokumente für den Nutzer besonders effizient und/oder mit geringen Kosten erfolgt.

Die Aufgabe wird durch die Merkmale des Anspruchs 1 gelöst. Vorteilhafte Ausgestaltungen der Erfindung werden in den abhängigen Ansprüchen angegeben.

Bei der Erfindung erfolgt eine Modifikation des Hypertexts mit Hilfe einer externen Datenbasis von Verweisen. Das http-proxy Programmodul erhält den anzuzeigenden Hypertext z.B. aus dem globalen Computernetz oder dem eigenen Computer und vergleicht die darin enthaltenen Verweise mit den Einträgen in der Datenbasis. Stimmt ein Querverweis überein, wird die Darstellung des anzuzeigenden Textes des Verweises geändert. Dadurch wird erreicht, daß Verweise mit einer besonderen Bedeutung auf der Anzeige des Computersystems in einer sich von anderen Verweisen unterscheidenden Darstellung angezeigt werden.

### Kurzbeschreibung der Abbildungen

Es zeigen
- Fig. 1: die Anzeige eines Dokuments vor der Modifizierung,
- Fig. 2: die Anzeige eines Dokuments nach der Modifizierung,
- Fig. 3: das Blockschaltbild eines Computersystems zum Darstellen von Hypertextdokumenten und
- Fig. 4: den Programmablaufplan zum Anzeigen von Hypertextdokumenten mit Manipulation von Verweisen, die sowohl im Hypertextdokument als auch in einer Datenbasis vorhanden sind.

### Beschreibung einer Ausführungsform der Erfindung

Ein Übertragungsprotokoll für Hypertextdokumente im globalen Computernetzwerk ist das HTTP (Hypertext Transfer Protokoll). Das HTTP ist beispielsweise für die Version 1.1 beschrieben in dem Dokument RFC 2068. Die Technik eines http-proxy Programmoduls zum Selektieren von Verweisen in Hypertextdokumenten ist durch die weiter oben genannte Veröffentlichung des Programms 'junkbuster' vollständig bekannt.

Ein solches http-proxy Programmodul, auch Filterprogrammodul genannt, enthält ein Programmteil, welcher das Hypertextdokument zu bearbeiten in der Lage ist. Dieses Filter programmodul liest das Hypertextdokument nach einer Anforderung über einen Eingabeteil ein und kopiert es auf einen Ausgabeteil. Ferner liest es aus einer Datenbasis, im einfachsten Fall aus einer Datei, den zu markierenden Verweis. Solche Verweise geben eine Adresse im globalen Computernetz an und werden auch als URL (Uniform Resource Locator) bezeichnet. Der Eingabeteil wird dabei gemäß der HTML-Syntax untersucht. In der HTML-Syntax werden Steuerzeichen verwendet, die den Anfang und das Ende eines Befehls kennzeichnen. Zum Kennzeichnen des Anfangs werden die Zeichen <> und zum Kennzeichnen des Endes die Zeichen </> eingesetzt. Diese Zeichen werden auch als Markierung oder als Fähnchen (englisch tag) bezeichnet. Gemäß dieser HTML-Syntax wird das Hypertextdokument untersucht und z.B. die Markierung '<A' gesucht. Sodann wird nach einem Eintrag 'HREF="' in dem Hypertextdokument gesucht. Auf den Eintrag 'HREF=' folgend befindet sich eine URL-Adresse. Diese URL-Adresse wird mit den Einträgen in der Datenbasis verglichen. Falls die Adresse mit einem Eintrag in der Datenbasis übereinstimmt, wird der Eintrag dieser Markierung modifiziert, d.h. die Darstellungsattribute des Verweises werden modifiziert. Die Modifizierung kann für alle übereinstimmenden Verweise gleich erfolgen oder durch einen Eintrag in der Datenbasis, der dem Eintrag der URL-Adresse zugeordnet ist, genauer spezifiziert werden. Dadurch wird erreicht, daß der Anwender dem in der Datenbasis enthaltenen Verweis eine Bedeutung und/oder Wertigkeit zuordnet und er somit durch Unterschiede der Darstellungsattribute der Verweise Hinweise zur Bedeutung des Verweises erhält. Für vom Anwender festgelegte Verweisgruppen kann vom Anwender mindestens ein sich von anderen Verweisen unterscheidendes Darstellungsattribut festgelegt werden. So kann z.B. ein mit der Farbe Rot hinterlegter Text den Verweis zu Dokumenten von Mitbewerbern und ein mit der Farbe Grün hinterlegter Text Verweise zu Dokumenten von Geschäftspartnern kenntlich machen.

In den folgenden beiden Beispielen wird einmal das Markierungspaar '<B>' und '</B> um die Markierung '<A>' und '</A> herum eingefügt bzw. die Markierung '<A>' durch einen 'STYLE' Eintrag ergänzt.

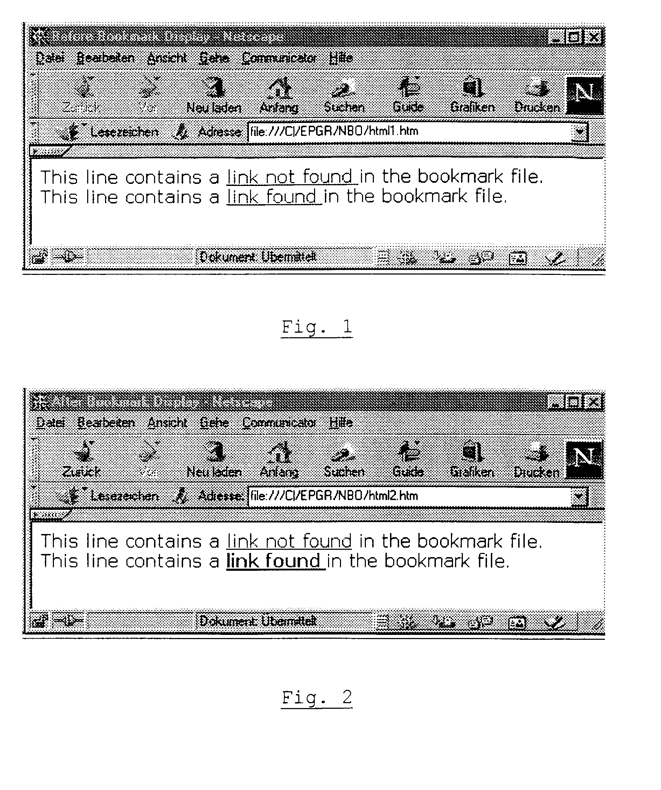

Beispielsweise bestehe das angeforderte Hypertextdokument, wie es bei dem http-proxy Programmodul eintrifft, aus folgenden Zeilen, die lediglich hier in der Wiedergabe numeriert sind, um darauf Bezug nehmen zu können. Der folgende Text wird wie in Fig. 1 angezeigt:
1. <HTML> <HEAD>
2. <TITLE> Before Bookmark Display </TITLE>
3. </HEAD> <BODY>
4. This line contains a <A HREF="http://no.mark.net"> link not found </A> in the bookmark file.
5. <BR>
6. This line contains a <A href="http://has.mark.net"> link found </A> in the bookmark file.
7. </BODY> </HTML>

Sofern die URL 'http://has.mark.net' in der Datenbasis enthalten ist, wird die 6. Zeile durch das http-proxy Programmodul modifiziert, indem hier vor und hinter die URL-Adresse der Code '<B>' bzw. '</B>' eingefügt wird:
1. <HTML> <HEAD>
2. <TITLE> After Bookmark Display </TITLE>
3. </HEAD> <BODY>
4. This line contains a <A HREF="http://no.mark.net"> link not found </A> in the bookmark file.
5. <BR>
6. This line contains a <B> <A href="http://has.mark.net"> link found </A> <B> in the bookmark file.
7. </BODY> </HTML>

Dadurch wird der Verweis hervorgehoben: Üblicherweise wird dies von dem Browser durch eine fette Schriftart angezeigt, wie aus Fig. 2 ersichtlich.

Alternativ ist auch ein Hervorheben durch Farbe möglich. In HTML Version 4 kann dies durch eine 'style'-Angabe erreicht werden:
1. <HTML> <HEAD>
2. <TITLE> After Bookmark Display </TITLE>
3. </HEAD> <BODY>
4. This line contains a <A HREF=http://no.mark.net> link not found </A> in the bookmark file.
5. <BR>
6. This line contains a <A href=http://has.mark.net style="background:yellow"> link found </A> in the bookmark file.
7. </BODY> </HTML>

Die Datenbasis, nach der die zu markierenden Verweise bestimmt werden, wird im einfachsten Fall als Pfad für eine Datei dem http-proxy Programmodul zwar konfigurierbar, aber vorbestimmt mitgeteilt. In der Komponente, mit der diese Konfiguration eingestellt wird, ist es auch möglich, den Benutzer zu fragen, ob einer der bekannten Browser verwendet wird, um sodann an kanonischen Stellen im Dateisystem nach der Liste mit bevorzugten Dokumenten zu suchen. Eine solche Liste ist z.B. bei dem Browser "Netscape Navigator" der Firma Netscape cooperation als Lesezeichen bezeichnet und beim Browser "Internet Explorer" der Firma Microsoft Cooperation als Favoriten.

Eine Weiterbildung der Erfindung verwendet die in der Anfrage enthaltenen Daten, um den Browser zu bestimmen und die Liste automatisch an den kanonischen Stellen zu ermitteln. Die durch den Browser nicht dargestellten Teile des Hypertextdokuments enthalten in der Regel ein Feld 'user agent', das wie folgt lautet:
Mozilla/4.0 (compatible; Opera/3.0; 4.0) 3.50 [en]
Mozilla/2.0 (compatible; MSIE 3.02; Windows NT)
Mozilla/4.51 [de]C-CCK-MCD QXW03200 (WinNT; I)

Daraus kann durch Mustervergleich festgestellt werden, daß die erste Anfrage von dem Browser stammt, der unter dem Namen 'Opera' vertrieben wird, die zweite von dem 'Internet-Explorer' in der Version 3.02 der Firma Microsoft Cooperation und der dritte vom 'Netscape Navigator' in der Version 4.51 der Firma Netscape Cooperation. Daraus kann für den Netscape Navigator der Version 4.51 dann unter dem Betriebssystem 'Windows NT' der Firma Microsoft Cooperation geschlossen werden, daß die Lesezeichen-Datei in der 'registry' unter dem Schlüssel
HKEY_CURRENT_USER/Software/Netscape/Netscape Navigator/Bookmark List/File Location
zu finden ist. Der Inhalt dieser Datei ist ein Hypertextdokument, dessen Verweisadressen die Datenbasis darstellen und von dem http-proxy Programmodul zum Filtern extrahiert werden.

Alternativ oder zusätzlich zu der Verwendung der Liste bevorzugter Dokumente (Lesezeichen/Favortit) kann auch die Startseite (unter ".../Main/Home Page") auf Verweise hin ausgewertet werden.

Eine andere Weiterbildung verwendet eine Datenbasis, die über ein weiteres Programmodul vom Benutzer verändert werden kann, insbesondere über ein Hypertextdokument, das durch den in manchen Browsern verfügbaren Editor modifiziert werden kann. Dabei wird dann in der Regel für einen schnellen Sucherfolg intern eine eigene Datenbasis verwendet, in die die dem Benutzer sichtbaren Quelldokumente jeweils eingefügt werden. Diese Datenbasis kann bei jeder Abfrage über das Änderungsdatum der eingefügten Dateien feststellen, ob die Datenbasis neu erstellt werden muß.

In einer vorteilhaften Weiterbildung der Erfindung werden die in dem Hypertextdokument enthaltenen Verweise mit den Einträgen in der Datenbasis verglichen, wobei der Vergleich mit einem Muster durchgeführt wird. Das Muster besteht aus einer Zeichenfolge. Enthält der Verweis im Hypertextdokument diese Zeichenfolge, unabhängig davon, welche Zeichen oder Zeichenfolgen der übereinstimmenden Zeichenfolge vorangestellt und/oder angefügt sind, werden die Darstellungsattribute des Verweises durch das http-proxy Programmodul modifiziert. Dadurch wird erreicht, daß z.B. die Darstellungsattribute der Verweise, die mit einer Zeichenfolge beginnen, modifiziert werden, ohne daß alle Verweise einzeln in der Datenbasis enthalten sind.

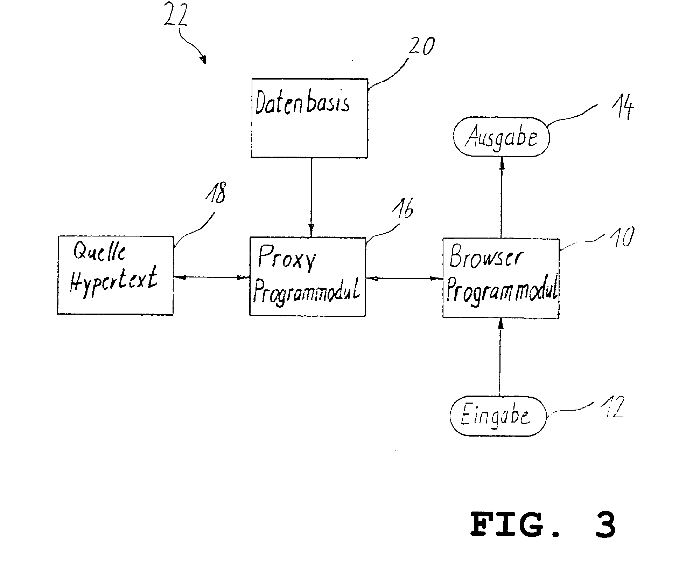

In Figur 3 ist ein Blockschaltbild eines Computersystems 22 dargestellt, mit dem Hypertextdokumente dargestellt werden. Die Hypertextdokumente sind die in einer Hypertext Dokumentenbeschreibungssprache unter Verwendung von Darstellungsattributen erzeugt und in dieser Hypertext Dokumentenbeschreibungssprache formatiert. Sie enthalten Verweise auf andere Dokumente. Über die Eingabeeinheit 12 wird beim Bowser Programmodul 10 des Computersystems 22 ein Hypertextdokument D1 durch die Angabe der Adresse des Dokuments D1 im globalen Computernetzwerk angefordert. Diese Anforderung wird vom Browser 10 an das http-proxy Programmodul 16 übergeben. Das http-proxy Programmodul 16 fordert das Dokument D1 im globalen Netzwerk an. Dabei kann sich die Quelle 18 des Hypertextdokuments D1 sich an einer beliebigen Stelle im globalen Netzwerk befinden, auch im eigenen Computersystem 22. Das Hypertextdokument D1 wird z.B. vom Globalen Netzwerk an das http-proxy Programmodul 16 übergeben. Die darin enthaltenen Verweise werden mit den Einträgen in einer Datenbasis 20 verglichen. Bei Übereinstimmung werden die Darstellungsattribute der übereinstimmenden Verweise entsprechend der Vorgaben in der Datenbasis 20 angepaßt und dem Browser 10 als Hypertextdokument D2 übergeben. Der Browser 10 gibt das Hypertextdokument D2 auf einer Ausgabeeinheit 14 aus. Die Ausgabeeinheit 14 kann z.B. ein Bildschirm und/oder ein Drucker sein.

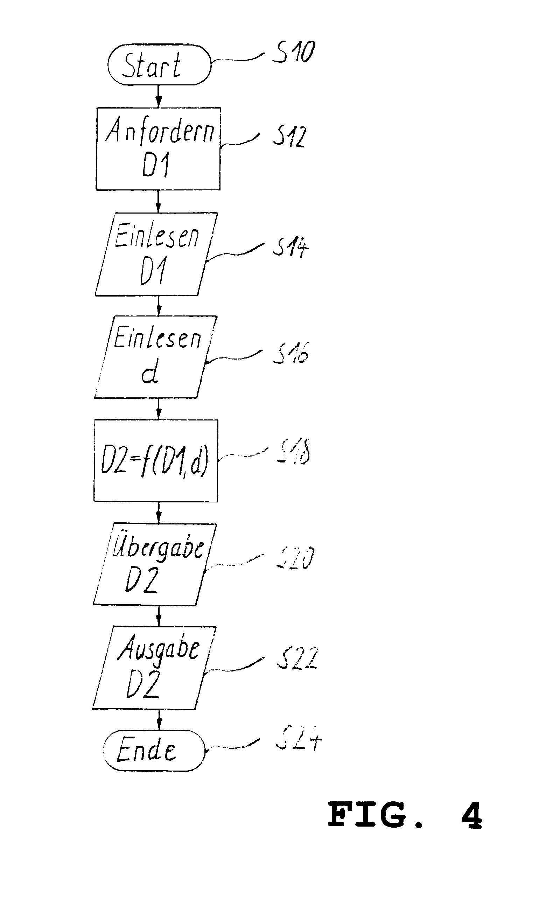

In Figur 4 sind die Verfahrensschritte zum Anzeigen von Hypertextdokumenten anhand eines Programmablaufplans dargestellt, wobei die im Hypertextdokument D1 enthaltenen Verweise, die sowohl im Hypertextdokument D1 als auch in einer Datenbasis 20 vorhanden sind, in ihren Darstellungsattributen verändert ausgegeben werden. Im Schritt S10 wird der Ablauf begonnen. Der Browser 10 fordert ein Hypertextdokument D1 im Schritt S12 an, wobei die Anforderung durch das http-proxy Programmodul 16 an das globale Computernetzwerk 18 erfolgt. Das http-proxy Programmodul 16 erhält im Schritt S14 das Hypertextdokument D1 und im Schritt S16 die Datenbasis 20. Im Schritt S18 werden die im Hypertextdokument D1 enthaltenen Verweise mit den Einträgen in einer Datenbasis 20 verglichen. Im Schritt S18 werden bei Übereinstimmung eines Verweises mit einem Eintrag in der Datenbasis 20 die Darstellungsattribute des übereinstimmenden Verweises im Hypertextdokument D1 abgeändert. Nachdem alle Verweise des Hypertextdokuments im Schritt S18 überprüft und gegebenenfalls abgeändert worden sind, wird das durch das Abändern entstandene Hypertextdokument D2 im Schritt S20 an den Browser 10 übergeben und durch den Browser 10 auf einer Ausgabeeinheit 14 im Schritt S22 ausgegeben.

### Bezugszeichenliste

- 10: Browser Programmodul
- 12: Eingabeeinheit
- 14: Ausgabeeinheit
- 16: http-proxy Programmodul
- 18: Quelle des Hypertextdokuments
- 20: Datenbasis
- 22: Computersystem

## Patentansprüche

1. Computersystem mit mindestens einem ersten Programmodul (16) zum Auffinden von Verweisen in Hypertextdokumenten, die in einer Hypertext Dokumentenbeschreibungssprache unter Verwendung von Darstellungsattributen erzeugt und in dieser Hypertext Dokumentenbeschreibungssprache formatiert sind und die Verweise auf andere Dokumente enthalten, **dadurch gekennzeichnet,** daß das erste Programmodul (16) die Verweise in einer Datenbasis (20) aufsucht und die Darstellungsattribute von den mit dem in der Datenbasis (20) übereinstimmenden Verweisen in dem Hypertextdokument modifiziert.

2. Computersystem nach Anspruch 1, **dadurch gekennzeichnet,** daß das Computersystem (22) ein weiteres Programmodul enthält, mit dessen Hilfe die Datenbasis (20) modifiziert wird.

3. Computersystem nach einem der vorhergehenden Ansprüche, **dadurch gekennzeichnet,** daß die Datenbasism (20) zusätzlich Anweisungen darüber enthält, wie die Darstellungsattribute der Verweise zu modifizieren sind.

4. Computersystem nach einem der vorhergehenden Ansprüche, **dadurch gekennzeichnet,** daß die Datenbasis (20) die von einem Browser Programmodul (10) verwaltete Liste mit bevorzugten Dokumenten umfaßt.

5. Computersystem nach einem der vorhergehenden Ansprüche, **dadurch gekennzeichnet,** daß die modifizierten Darstellungsattribute Farbe, Schriftart und/oder Schriftstil der textuellen Anzeige betreffen.

6. Computersystem nach einem der vorhergehenden Ansprüche, **dadurch gekennzeichnet,** daß die modifizierten Darstellungsattribute bei mit Verweisen versehenen Grafiken betreffen: eine Einrahmung der Grafik, eine farbliche Veränderung, vorzugsweise durch inverse Farbdarstellung, eine Modifizierung, vorzugsweise durch farbliche Markierungselemente innerhalb der Grafik, eine Verkleinerung und Modifizierung, vorzugsweise durch horizontale Stauchung und Ergänzung um eine farbliche Markierung, so daß Originalgröße der Grafik erhalten bleibt, eine Ergänzung, vorzugsweise durch Markierungsfähnchengrafik an der Seite der Grafik.

7. Computersystem nach einem der vorhergehenden Ansprüche, **dadurch gekennzeichnet,** daß die modifizierten Darstellungsattribute bei Grafiken mit Imagemaps betreffen: eine Einrahmung der Grafik, eine farbliche Veränderung der Grafik oder des mit einem Verweis versehenen Teilbereichs der Grafik, vorzugsweise durch inverse Farbdarstellung, eine Modifizierung des mit dem Verweis versehenen Teilbereichs der Grafik, vorzugsweise durch eine farbliche Markierung, eine Modifizierung der Imagemap und der Grafik, vorzugsweise dadurch, daß der ungenutzter Teilbereich der Grafik farblich markiert und in der Imagemap mit einem Verweis versehen wird.

8. Verfahren zum Betreiben eines Computersystems, das mindestens ein erstes Programmodul (16) zum Auffinden von Verweisen in Hypertextdokumenten umfaßt, die in einer Hypertext Dokumentenbeschreibungssprache unter Verwendung von Darstellungsattributen erzeugt und in dieser Hypertext Dokumentenbeschreibungssprache formatiert sind und die Verweise auf andere Dokumente enthalten, **dadurch gekennzeichnet,** daß das erste Programmodul (16) die Verweise in einer Datenbasis (20) aufsucht und die Darstellungsattribute von den mit dem in der Datenbasis (20) übereinstimmenden Verweisen in dem Hypertextdokument modifiziert.

9. Verfahren nach Anspruch 8, **dadurch gekennzeichnet,** daß das Computersystem (22) ein weiteres Programmodul enthält, mit dessen Hilfe die Datenbasis (20) modifiziert wird.

10. Verfahren nach einem der vorhergehenden Ansprüche, **dadurch gekennzeichnet,** daß die Datenbasism (20) zusätzlich Anweisungen darüber enthält, wie die Darstellungsattribute der Verweise zu modifizieren sind.

11. Verfahren nach einem der vorhergehenden Ansprüche, **dadurch gekennzeichnet,** daß die Datenbasis (20) die von einem Browser Programmodul (10) verwaltete Liste mit bevorzugten Dokumenten umfaßt.

12. Computersoftware, umfassend Befehle in codierter Form, die nach dem Laden der Computersoftware ein Computersystem (22) veranlassen, die in den Ansprüchen 1 bis 11 genannten Schritte auszuführen.

13. Computersoftware nach Anspruch 12, **dadurch gekennzeichnet,** daß sie auf einem Speichermedium gespeichert ist.
